## Europäisches Patentamt

## European Patent Office

## Office européen des brevets

(11) Veröffentlichungsnummer: **0 027 532**
**B1**

(12) **EUROPÄISCHE PATENTSCHRIFT**

(45) Veröffentlichungstag der Patentschrift:
**11.05.88**

(21) Anmeldenummer: **80105368.7**

(22) Anmeldetag: **08.09.80**

(51) Int. Cl.⁴: **C 09 K 9/00,** B 29 C 71/04,
B 29 C 45/16, C 08 J 3/20,
B 23 K 26/00

(54) Verfahren zum Herstellen von mit verschiedenen Zeichen versehenen Kunststoff-Gerätetasten.

(30) Priorität: **12.09.79 DE 2936926**

(43) Veröffentlichungstag der Anmeldung:
**29.04.81 Patentblatt 81/17**

(45) Bekanntmachung des Hinweises auf die Patenterteilung:
**11.05.88 Patentblatt 88/19**

(84) Benannte Vertragsstaaten:
**CH FR GB IT LI SE**

(56) Entgegenhaltungen:
DE - A - 2 024 373
DE - A - 2 024 374
DE - A - 2 024 375
DE - A - 2 500 737
FR - A - 2 299 972
GB - A - 647 831
GB - A - 835 120
GB - A - 1 521 435
US - A - 3 655 256
US - A - 3 723 121
US - A - 3 789 420
US - A - 3 789 421

Soviet Journal of Instrumentation and Control, Nr. 5, Mai 1970, Seiten 60-62
Applied Optics, Band 2, Nr. 11, Nov. 1972, Seite 2556

(73) Patentinhaber: **Siemens Aktiengesellschaft Berlin und München, Wittelsbacherplatz 2, D-8000 München 2 (DE)**

(72) Erfinder: **Edinger, Egon, Friedemann-Bach-Strasse 69, D-8032 Gräfelfing (DE)**
Erfinder: **Reiser, Peter, Dipl.-Ing., Hindenburgstrasse 206, D-7300 Esslingen (DE)**

(56) Entgegenhaltungen: (Fortsetzung)
**Electronic Engineering, Bd. 18, Juli 1946, Seiten 208-212
IBM Technical Disclosure Bulletin, Bd. 20, Nr. 7, Dezember 1977, Seite 2861
IEEE, International electron devices meeting, October 1969, Seite 24
IEEE Journal of Quantum Electronics, Januar 1968, Nr. 141, Seite 40**

**Beschreibung**

Die Erfindung betrifft ein Verfahren zum Herstellen von mit verschiedenen Zeichen versehenen gleichartigen Kunststoff-Gerätetasten nach dem Oberbegriff des Anspruchs 1.

Mit verschiedenen Zeichen versehene gleichartige Kunststoff-Gerätetasten werden für die manuelle Eingabe von Daten und Informationen in entsprechende Verarbeitungssysteme, wie Schreib-, Rechen-, Fernschreibmaschinen, Fernsprechtischstationen und dgl. benötigt. Um bei der Herstellung dieser Kunststoff-Gerätetasten, insbesondere bei seltenen Sonderzeichen und exotischen Schriften, Werkzeugkosten zu sparen und Kundenwünsche schnell erfüllen zu können, ist es sinnvoll, einheitlich gespritzte Kunststoff-Gerätetasten durch nachträgliches Beschriften mit den gewünschten Zeichen zu versehen. In diesem Zusammenhang ist es bekanntgeworden, als Standardteile hergestellte Kunststoff-Gerätetasten nachträglich zu bedrucken. Die auf diese Weise hergestellten Kunststoff-Gerätetasten besitzen jedoch nicht die meist erforderliche Abriebfestigkeit und weisen damit nur eine bestimmte Lebensdauer auf. Bei hochwertigen Geräten werden an die Qualität der Kunststoff-Gerätetasten in bezug auf Lebensdauer und Abriebfestigkeit sehr hohe Anforderungen gestellt.

Diese können nur dann befriedigend erfüllt werden, wenn die Kunststoff-Gerätetasten im Zweifarben-Spritzgiessverfahren hergestellt werden. Dies bedingt jedoch, dass für jede Kunststoff-Gerätetaste mit unterschiedlichen Zeichen ein spezielles Werkzeug angefertigt und später zum Zwecke der Reservehaltung über längere Zeit gelagert werden muss.

Durch die GB-A-1 521 435 ist ein gattungsgemässes Verfahren zum Herstellen von mit verschiedenen Zeichen versehenen gleichartigen Kunststoff-Gerätetasten bekanntgeworden, bei welchem die einheitlich hergestellten Kunststoff-Gerätetasten ebenfalls erst durch nachträgliches Beschriften mit den gewünschten Zeichen versehen werden. Die beispielsweise aus Acrylnitril-Butadien-Styrol-Copolymeren oder Styrol-Acrylnitril-Copolymeren bestehenden Gerätetasten werden dabei zunächst auf ihrer Oberseite mit einer Schicht eines strahlungsempfindlichen Materials versehen. Bei diesen strahlungsempfindlichen Materialien handelt es sich beispielsweise um photosensitive Stoffe die auf dem Gebiet der Farbphotographie eingesetzt werden und bei Einwirkung von Strahlung durch chemische Veränderungen mit einem dauerhaften Farbumschlag reagieren. Dementsprechend können dann auf der Oberfläche der Kunststoff-Gerätetasten die gewünschten Zeichen mit Hilfe eines ablenkbaren fokussierten Laserstrahls erzeugt werden. Die auf diese Weise hergestellten Kunststoff-Gerätetasten besitzen jedoch ebenfalls nicht die für eine hohe Lebensdauer erforderliche Abriebfestigkeit. Das Aufbringen einer abriebfesten transparenten Schutzschicht kann in bezug auf Lebensdauer und Abriebfestigkeit auch nur eine gewisse Verbesserung herbeiführen.

Durch die GB-A-835 120 ist ein Verfahren zum Beschriften bzw. Bedrucken von Kunststoff-Teilen wie Schuhsohlen, Knöpfen, gemusterten Bodenbelägen, gemusterten Duschvorhängen und dergleichen bekanntgeworden, bei welchem als Ausgangsstoff ein Chlor enthaltendes Polymerisat mit einer besonderen Empfindlichkeit gegen hohe Energiestrahlung verwendet wird. Werden diese beispielsweise aus Polyvinylchlorid bestehenden Teile dann einer der Form des aufzubringenden Zeichens oder Musters angepassten Energiestrahlung ausgesetzt, so ergibt sich in den bestrahlten Bereichen durch physikalische und chemische Veränderungen im Kunststoff eine von der jeweiligen Strahlungsdosis abhängige Farbänderung. Bei der Bestrahlung von naturfarbenen Polyvinylchlorid mit einem Van-de-Graaff-Generator ändern sich die bestrahlten Bereiche beispielsweise in eine dunkle Bernsteinfarbe. Wird als Ausgangsstoff ein Polyvinylchlorid-Füllstoff-Gemisch mit Farbpigmenten als Füllstoff verwendet, so können durch die Bestrahlung beispielsweise Farbänderungen von Rot in Dunkelrot von Braun in Dunkelbraun oder Rotbraun oder von Weiss in Hellgelb erzielt werden. Durch die Einwirkung von Wärme, durch die Bestrahlung mit ultraviolettem Licht oder durch die Einwirkung von Tageslicht oder künstlichem Licht können sich dann weitere Farbänderungen ergeben, wobei insbesondere das verwendete Grundmaterial zu einem Nachdunkeln neigt.

Der Erfindung liegt die Aufgabe zugrunde, ein Verfahren zum Herstellen von mit verschiedenen Zeichen versehenen gleichartigen Kunststoff-Gerätetasten zu schaffen, welches bei einfacher Herstellung eine hohe Qualität der Kunststoff-Gerätetasten in bezug auf Lebensdauer und Abriebfestigkeit gewährleistet und auch die Lagerhaltung der Werkzeuge vereinfacht.

Diese Aufgabe wird bei einem gattungsgemässen Verfahren durch die kennzeichnenden Merkmale des Anspruchs 1 gelöst.

Bei dem erfindungsgemässen Verfahren wird dem Kunststoff also als Füllstoff ein strahlungsempfindliches Material beigemischt, welches bei entsprechender Energieeinstrahlung durch einen dauerhaften Farbumschlag reagiert. Aus einem derartigen Kunststoff-Füllstoff-Gemisch werden mit einem einheitlichen Werkzeug die Kunststoff-Gerätetasten gespritzt, an deren Oberfläche die gewünschten Zeichen dann mit Hilfe eines ablenkbaren, fokussierten Energiestrahls erzeugt werden. Die auf diese Weise hergestellten Kunststoff-Gerätetasten entsprechen dem Qualitätsstandard nach dem Zweifarben-Spritzgiessverfahren hergestellter Kunststoff-Gerätetasten. Dadurch, dass einheitlich gespritzte Standardteile Verwendung finden, die erst nachträglich mit den gewünschten Zeichen versehen werden, können nicht nur Werkzeugkosten eingespart werden, sondern auch Kundenwünsche schnell erfüllt werden.

Gemäss einer bevorzugten Ausgestaltung der Erfindung wird als Füllstoff ein bei entsprechender Wärmeeinstrahlung durch einen dauerhaften Farbumschlag reagierender Wärmestrahlungsindikator verwendet. Bei derartigen Wärmestrahlungsindikatoren, die auch als Temperaturmessfarben bezeichnet werden, handelt es sich um aus der Temperaturmessung allgemein bekannte Stoffe, die bei entsprechender Wärmeeinstrahlung durch einen dauerhaften Farbumschlag reagieren und durch den Farbumschlag das Erreichen einer bestimmten Temperatur anzeigen. So kann als Füllstoff beispielsweise ein als Farbpulver erhältlicher Wärmestrahlungsindikator verwendet werden, der von der Firma Faber-Castell unter dem eingetragenen Warenzeichen «Thermocolor» vertrieben wird (vgl. Römpps Chemie-Lexikon, 7. Auflage, Seiten 3490, 3491 und 3554).

Ein Ausführungsbeispiel der Erfindung ist in der Zeichnung dargestellt und wird im folgenden näher beschrieben.

Es zeigen
Fig. 1 eine Seitenansicht einer als Standardteil durch Spritzgiessen hergestellten Kunststoff-Gerätetaste,
Fig. 2 eine Ansicht von oben auf die Kunststoff-Gerätetaste gemäss Fig. 1,
Fig. 3 eine Seitenansicht einer Kunststoff-Gerätetaste, welche von einem Lasersystem gerade beschriftet wird,
Fig. 4 eine Ansicht von oben auf die Kunststoff-Gerätetaste gemäss Fig. 3,
Fig. 5 eine Seitenansicht einer bereits beschrifteten Kunststoff-Gerätetaste und
Fig. 6 eine Ansicht von oben auf die Kunststoff-Gerätetaste gemäss Fig. 5.

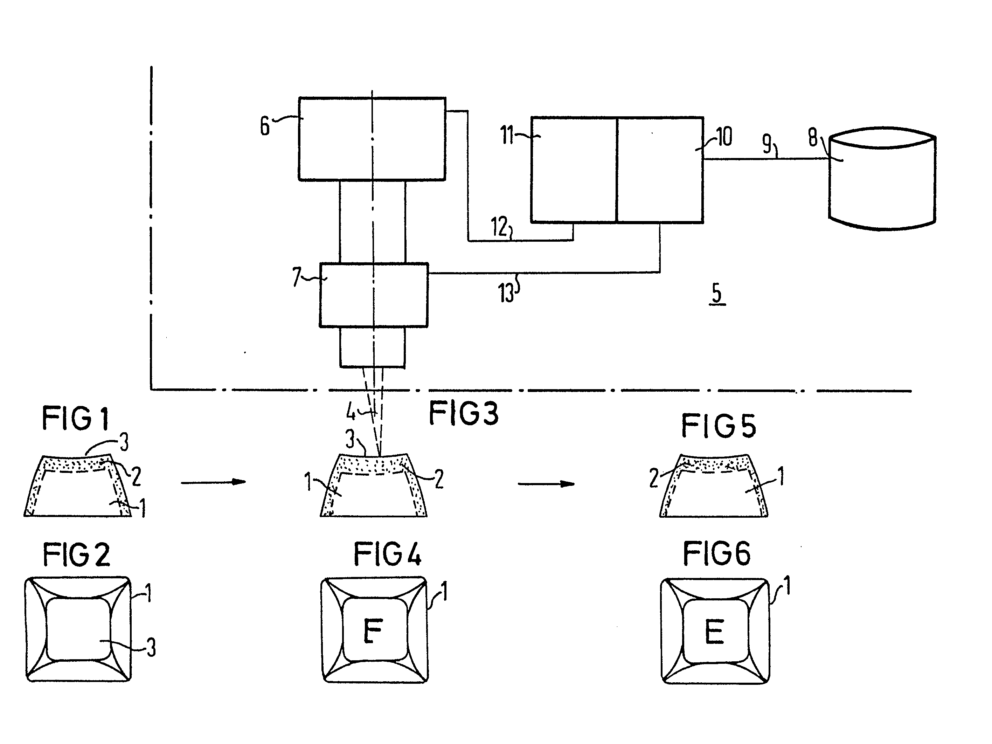

In Fig. 1 ist mit 1 eine als Standardteil durch Spritzgiessen hergestellte Kunststoff-Gerätetaste bezeichnet, wobei dem als Grundmaterial verwendeten Kunststoff als strahlungsempfindlicher Füllstoff ein durch Punkte angedeuteter Wärmestrahlungsindikator 2 beigemischt ist. Ein als Füllstoff geeigneter Wärmestrahlungsindikator 2 ist beispielsweise das von der Firma Faber-Castell unter dem Warenzeichen «Thermocolor» zur Flächen-Temperaturmessung vertriebene Farbpulver. Die aus einem derartigen Kunststoff-Füllstoff-Gemisch mit Hilfe eines einheitlichen Werkzeuges durch Spritzgiessen hergestellte Kunststoff-Gerätetaste 1 weist gemäss Fig. 2 an ihrer Oberseite 3 zunächst noch kein Schriftzeichen auf.

Wie Fig. 3 zeigt, wird die Oberfläche 3 der Kunststoff-Gerätetaste 1 einem ablenkbaren Laserstrahl 4 eines allgemein mit 5 bezeichneten Laserbeschriftungssystems ausgesetzt. Hierbei wird der Laserstrahl 4 entsprechend der Form des aufzubringenden Schriftzeichens abgelenkt. Derartige Laserbeschriftungssysteme sind an sich bekannt. Hierbei ist mit 6 ein Teil bezeichnet, in dem der Laserstrahl 4 erzeugt wird. Mit Hilfe eines Ablenksystems 7 wird der Laserstrahl 4 entsprechend der Form des Schriftzeichens abgelenkt. Die Steuerung des Ablenksystems 7 erfolgt von einem Programmspeicher 8 über eine Leitung 9 und einem Steuerungsteil 10, welcher über eine Leitung 13 mit dem Ablenksystem 7 in Verbindung steht. Ein Energieversorgungsteil 11 steht über eine Leitung 12 mit dem Teil 6 in Verbindung. Der Programmspeicher 8 gibt entsprechend dem gewünschten Zeichen Signale an den Steuerungsteil 10, welcher das Ablenksystem 7 entsprechend beeinflusst. Durch den auf die Oberfläche 3 der Kunststoff-Gerätetaste 1 auffallenden Laserstrahl verfärbt sich der dem Kunststoff des Grundmaterials als Füllstoff beigemischte Wärmestrahlungsindikator 2 dauerhaft.

Wie Fig. 4 zeigt, wird die Oberfläche 3 der Kunststoff-Gerätetaste 1 gerade mit dem Zeichen E versehen. Fig. 5 und 6 zeigen die bereits unter Strahleinwirkung entsprechend fertig beschriftete Kunststoff-Gerätetaste 1.

Anstelle eines Laserstrahls kann auch ein Elektronenstrahl verwendet werden.

Gemäss einer Variante des erfindungsgemässen Verfahrens wird der als strahlungsempfindlicher Füllstoff verwendete Wärmestrahlungsindikator 2 dem Kunststoff des Grundmaterials partiell beigemischt, so dass z.B. nur eine Schicht geringer Dicke unter der zu beschriftenden Oberseite 3 der Kunststoff-Gerätetaste 1 mit Wärmestrahlungsindikator 2 versehen ist, das übrige Tastenmaterial dagegen frei von diesem Füllstoff bleibt. Dadurch können die Kosten für den als Füllstoff verwendeten Wärmestrahlungsindikator 2 reduziert werden.

## Patentansprüche

1. Verfahren zum Herstellen von mit verschiedenen Zeichen versehenen gleichartigen Kunststoff-Gerätetasten (1) auf deren Oberfläche die gewünschten Zeichen (E) mit Hilfe eines ablenkbaren fokussierten Energiestrahls durch Verfärben eines strahlungsempfindlichen Materials erzeugt werden, dadurch gekennzeichnet, dass das strahlungsempfindliche Material dem Kunststoff des Grundmaterials als Füllstoff (2) beigemischt wird, dass dann aus diesem Kunststoff-Füllstoff-Gemisch mit einem einheitlichen Werkzeug die Kunststoff-Gerätetasten (1) gespritzt werden und danach die gewünschten Zeichen (E) mit Hilfe des Energiestrahls erzeugt werden.

2. Verfahren nach Anspruch 1, dadurch gekennzeichnet, dass als Füllstoff (2) ein bei entsprechender Wärmeeinstrahlung durch einen dauerhaften Farbumschlag reagierender Wärmestrahlungsindikator verwendet wird.

3. Verfahren nach Anspruch 1 oder 2, dadurch gekennzeichnet, dass als Energiestrahl ein Laserstrahl (4) verwendet wird.

4. Verfahren nach einem der vorhergehenden Ansprüche, dadurch gekennzeichnet, dass der Füllstoff (2) dem Kunststoff partiell beigemischt wird.

## Claims

1. Process for the production of identical equipment keys (1) of plastic provided with different characters, on the surface of which keys the required characters (E) are produced with the aid of a directable focussed energy beam by the colour change of a radiation-sensitive material, characterized in that the radiation-sensitive material is admixed as filler (2) with the plastic of the base material, in that the plastic equipment keys (1) are then injection-moulded from this plastic/filler mixture with a standard mould, and subsequently the required characters (E) are produced with the aid of the energy beam.

2. Process according to claim 1, characterized in that a thermal radiation indicator reacting upon a corresponding absorption of heat by undergoing a permanent colour change is used as filler (2).

3. Process according to claim 1 or 2, characterized in that a laser beam (4) is used as energy beam.

4. Process according to one of the preceding claims, characterized in that the filler (2) is partially admixed with the plastic.

**Revendications**

1. Procédé pour fabriquer des touches d'appareils en matière plastique (1) identiques, et portant des signes différents et sur la face supérieure desquelles le signe désiré (E) est formé, au moyen d'un faisceau d'énergie focalisé pouvant être déplacé par balayage, par coloration d'un matériau sensible au rayonnement, caractérisé par le fait qu'on mélange le matériau sensible au rayonnement en tant que substance de remplissage (2) à la matière plastique constituant le matériau de base, qu'on réalise ensuite les touches en matière plastique (1) par moulage par injection de ce mélange matière plastique-substance de remplissage en utilisant un outil uniforme et qu'on forme ensuite le signe désiré (E) à l'aide du faisceau d'énergie.

2. Procédé suivant la revendication 1, caractérisé par le fait qu'on utilise comme substance de remplissage (2) un indicateur de rayonnement thermique, qui réagit au moyen d'un virage de couleur permanent, dans le cas où il est soumis à un rayonnement thermique correspondant.

3. Procédé suivant la revendication 1 ou 2, caractérisé par le fait qu'on utilise, comme faisceau d'énergie, un faisceau laser (4).

4. Procédé suivant l'une des revendications précédentes, caractérisé par le fait qu'on mélange la substance de remplissage (2) partiellement à la matière plastique.

FIG 1

FIG3

FIG 5

FIG 2

FIG 4

FIG6

E

E